# EUROPEAN PATENT APPLICATION

(11) **EP 4 422 194 A1**
(43) Date of publication of application: **28.08.2024**
(21) Application number: 23157719.8
(22) Date of filing: 21.02.2023
(51) Int. Cl.: H04N 23/63, H04N 23/60, H04N 23/90

(54) **APPARATUS FOR DISPLAYING ALERTS**

(71) Applicant: Nokia Technologies Oy, 02610 Espoo (FI)
(72) Inventor: LEPPÄNEN, Jussi Artturi, Tampere (FI); VILERMO, Miikka Tapani, Siuro (FI); LEHTINIEMI, Arto Juhani, Lempäälä (FI)
(74) Representative: Nokia EPO representatives

(57) **Abstract**

Example embodiments relate to an apparatus, method and computer program for displaying alerts, for example for output on a camera viewfinder image. The apparatus may comprise means for receiving a plurality of sets of image data from a respective plurality of cameras on the apparatus having overlapping fields-of-view, wherein the plurality of sets of image data are used in combination to provide a final image. The apparatus may also comprise means for displaying a viewfinder image comprising at least part of a first set of the image data received from a first camera of the plurality of cameras. The apparatus may also comprise means for detecting an object obstructing at least part of a field-of-view of a second camera of the plurality of cameras and not a field-of-view of the first camera. The apparatus may also comprise means, responsive to the detection, for displaying an alert on the viewfinder image.

## Description

### Field

Example embodiments relate to an apparatus, method and computer program for displaying alerts, for example for output on a camera viewfinder image.

### Background

Apparatuses may comprise a plurality of cameras arranged on a common side or surface having at least partially overlapping fields-of-view. Each camera may comprise a camera sensor for generating a respective set of image data.

Upon receipt of a capture or save input, the apparatus may combine at least some image data from the different sets of image data to produce a final image. For example, first and second cameras at respective positions on the apparatus may produce respective left and right - hand images of a subject. The final image may be a three-dimensional image of the subject, or computed depth information may be used to blur part of a background region, as may be used in a typical portrait mode of operation. In another example, a first camera may have a first resolution and a second camera may have a second, higher resolution.

### Summary

According to a first aspect, this specification describes an apparatus, comprising: means for receiving a plurality of sets of image data from a respective plurality of cameras on the apparatus having overlapping fields-of-view, wherein the plurality of sets of image data are used in combination to provide a final image; means for displaying a viewfinder image comprising at least part of a first set of the image data received from a first camera of the plurality of cameras; means for detecting an object obstructing at least part of a field-of-view of a second camera of the plurality of cameras and not a field-of-view of the first camera; and means, responsive to the detection, for displaying an alert on the viewfinder image.

The means for detecting an object may be configured to detect the object based, at least in part, on second image data from the second camera.

The means for detecting an object may be configured to detect within the second image data an object corresponding to one or more predetermined object types.

The means for detecting an object may be configured to use a machine-learned model trained using training data comprising images representing, at least in part, the one or more predetermined object types.

The means for detecting an object may be configured to detect the object based, at least in part, on the position and brightness of one or more objects within the second image data.

The means for detecting an object may be configured to detect an object as one that extends inwards from an edge of an image represented by the second image data and has a below-threshold brightness.

The means for detecting an object may be further configured to detect the object based, at least in part, on proximity of a real-world object represented in the second image data to the second camera.

The object may comprise at least part of a user's finger.

The means for displaying the alert may be configured to display a representation of the object on the viewfinder image.

The representation of the object may be displayed on the viewfinder image at a position based on where the object would appear in the final image.

The representation of the object displayed on the viewfinder image may comprise an outline or partially-transparent representation of the object.

The apparatus may further comprise means for quantifying an impact of the object on the final image and wherein the amount of outline or transparency is based on quantified impact.

The quantified impact may be based on the amount or proportion of the second image data that represents the object.

The means for detecting an object may further be configured to detect an object at least partly obstructing respective fields-of-view of a plurality of the cameras, including that of the second camera, and wherein the quantified impact is based on the number of respective fields-of-view that the object at least partly obstructs.

According to a second aspect, this specification describes a method, comprising: receiving a plurality of sets of image data from a respective plurality of cameras oriented in the same direction, wherein the plurality of sets of image data are used in combination to provide a final image; displaying a viewfinder image comprising at least part of a first set of the image data received from a first camera of the plurality of cameras; detecting an object obstructing at least part of a field-of-view of a second camera of the plurality of cameras and not a field-of-view of the first camera; and displaying, responsive to the detection, an alert on the viewfinder image.

Detecting an object may comprise detecting the object based, at least in part, on second image data from the second camera.

The method may comprise detecting within the second image data an object corresponding to one or more predetermined object types.

Detecting may use a machine-learned model trained using training data comprising images representing, at least in part, the one or more predetermined object types.

Detecting an object may comprise detecting the object based, at least in part, on the position and brightness of one or more objects within the second image data.

Detecting an object may comprise detecting the object based as one that extends inwards from an edge of an image represented by the second image data and has a below-threshold brightness.

Detecting an object may further be based, at least in part, on proximity of a real-world object represented in the second image data to the second camera.

The object may comprise at least part of a user's finger.

Displaying the alert may comprise displaying a representation of the object on the viewfinder image.

The representation of the object may be displayed on the viewfinder image at a position based on where the object would appear in the final image.

The representation of the object displayed on the viewfinder image may comprise an outline or partially-transparent representation of the object.

The method may further comprise quantifying an impact of the object on the final image and wherein the amount of outline or transparency is based on quantified impact.

The quantified impact may be based on the amount or proportion of the second image data that represents the object.

Detecting an object may further comprise detecting an object at least partly obstructing respective fields-of-view of a plurality of the cameras, including that of the second camera, and wherein the quantified impact is based on the number of respective fields-of-view that the object at least partly obstructs.

According to a third aspect, this specification describes a computer program comprising instructions which, when executed by an apparatus, cause the apparatus to: receive a plurality of sets of image data from a respective plurality of cameras oriented in the same direction, wherein the plurality of sets of image data are used in combination to provide a final image; display a viewfinder image comprising at least part of a first set of the image data received from a first camera of the plurality of cameras; detect an object obstructing at least part of a field-of-view of a second camera of the plurality of cameras and not a field-of-view of the first camera; and display, responsive to the detection, an alert on the viewfinder image.

In some examples, features of the second aspect may be used as part of the third aspect.

According to a fourth aspect, this specification describes a computer-readable medium (such as a non-transitory computer-readable medium) comprising program instructions stored thereon for performing at least the following: receive a plurality of sets of image data from a respective plurality of cameras oriented in the same direction, wherein the plurality of sets of image data are used in combination to provide a final image; display a viewfinder image comprising at least part of a first set of the image data received from a first camera of the plurality of cameras; detect an object obstructing at least part of a field-of-view of a second camera of the plurality of cameras and not a field-of-view of the first camera; and display, responsive to the detection, an alert on the viewfinder image.

In some examples, features of the second aspect may be used as part of the fourth aspect.

According to a fifth aspect, this specification describes an apparatus comprising: at least one processor; and at least one memory including computer program code which, when executed by the at least one processor, causes the apparatus to: receive a plurality of sets of image data from a respective plurality of cameras oriented in the same direction, wherein the plurality of sets of image data are used in combination to provide a final image; display a viewfinder image comprising at least part of a first set of the image data received from a first camera of the plurality of cameras; detect an object obstructing at least part of a field-of-view of a second camera of the plurality of cameras and not a field-of-view of the first camera; and display, responsive to the detection, an alert on the viewfinder image.

In some examples, features of the second aspect may be used as part of the fifth aspect.

### Drawings

Embodiments will now be described, by way of example only, with reference to the drawings, in which:
FIG. 1 is a front plan view of a user device;
FIG. 2 is a rear plan view of the FIG. 1 user device;
FIG. 3 is a perspective view of a user when using the FIG. 1 user device;
FIG. 4A is a view of a viewfinder image that may be shown by the FIG. 1 user device;
FIG. 4B is a view of a final image captured by the FIG. 1 user device;
FIG. 5 is a partial plan view of a rear surface of the FIG. 1 user device in a situation when a camera is covered by an object;
FIG. 6A is a view of a viewfinder image that may be shown by the FIG. 1 user device in the

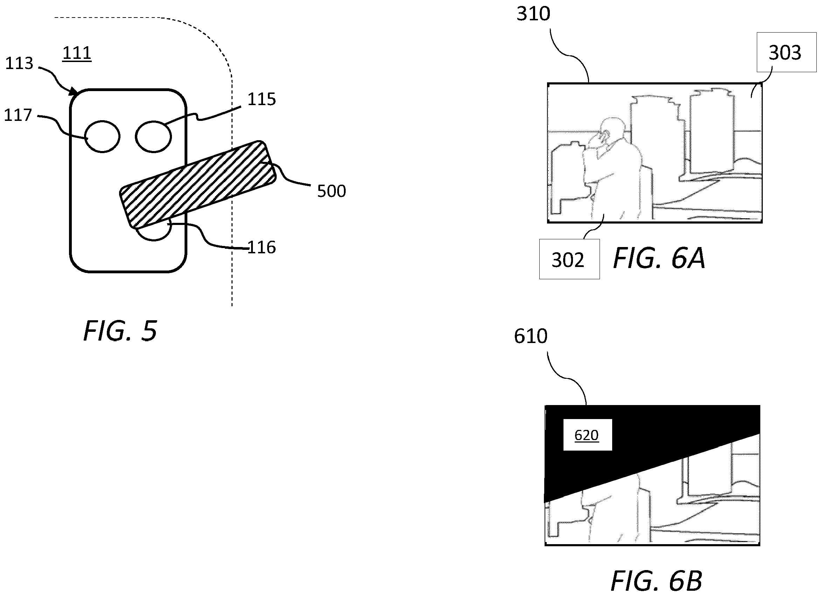

FIG. 5 situation;

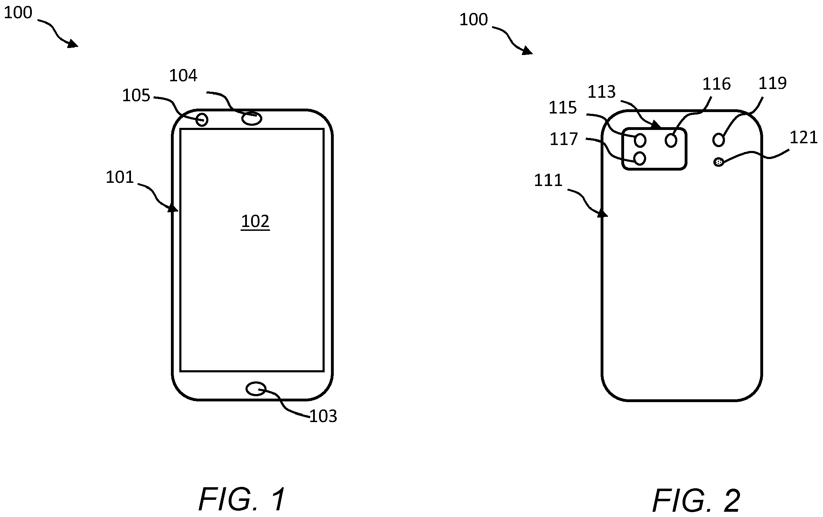

FIG. 6B is a view of the final image captured by the FIG. 1 user device in the FIG. 5 situation;

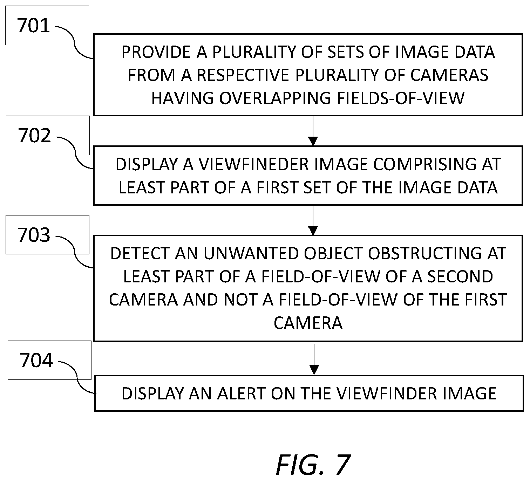

FIG. 7 is a flow diagram showing operations that may be performed according to one or more example embodiments;

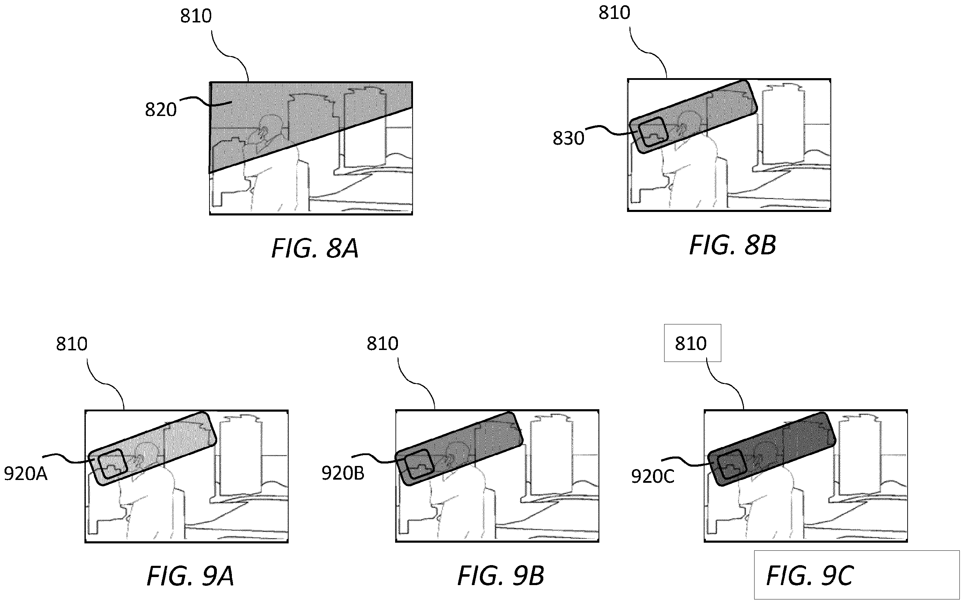

FIG. 8A and 8B are views of the viewfinder image of the FIG. 1 device, showing respective first and second example alerts according one or more example embodiments;
FIG. 9A - 9C are views of the viewfinder image of the FIG. 1 device, showing respective first to third example alerts according to one or more example embodiments;

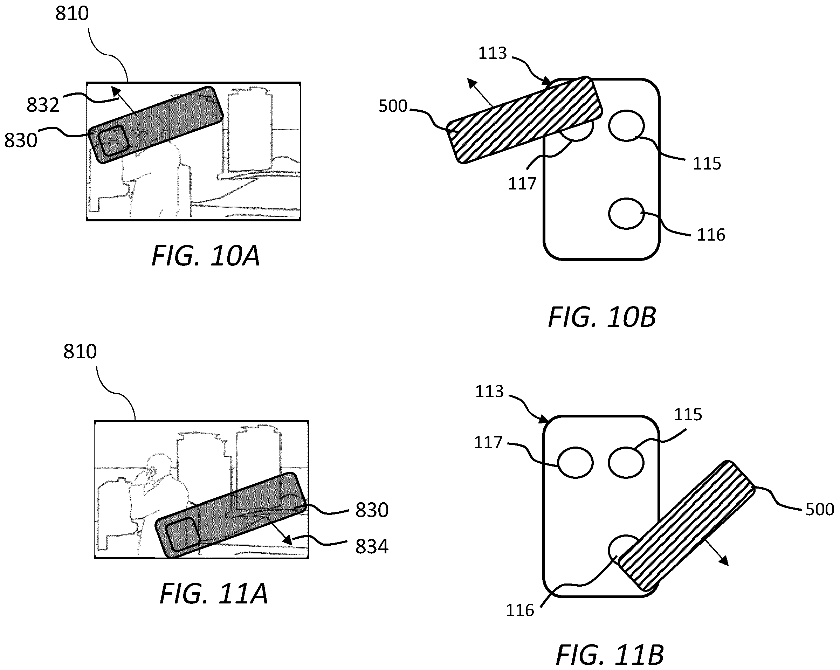

FIG. 10A is a view of the viewfinder image of the FIG. 1 device including a directional alert according to one or more example embodiments;
FIG. 10B is a partial plan view of a rear surface of the FIG. 1 user device, showing corrective user action that may result from the directional alert;
FIG. 11A is a view of the viewfinder image of the FIG. 1 device including a different directional alert according to one or more example embodiments;
FIG. 11B is a partial plan view of a rear surface of the FIG. 1 user device, showing corrective user action that may result from the different directional alert;

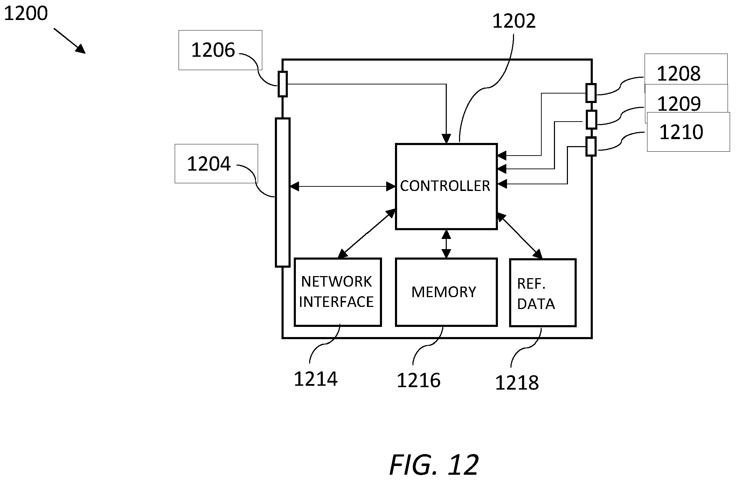

FIG. 12 is a schematic view of functional modules of an apparatus according to one or more example embodiments;

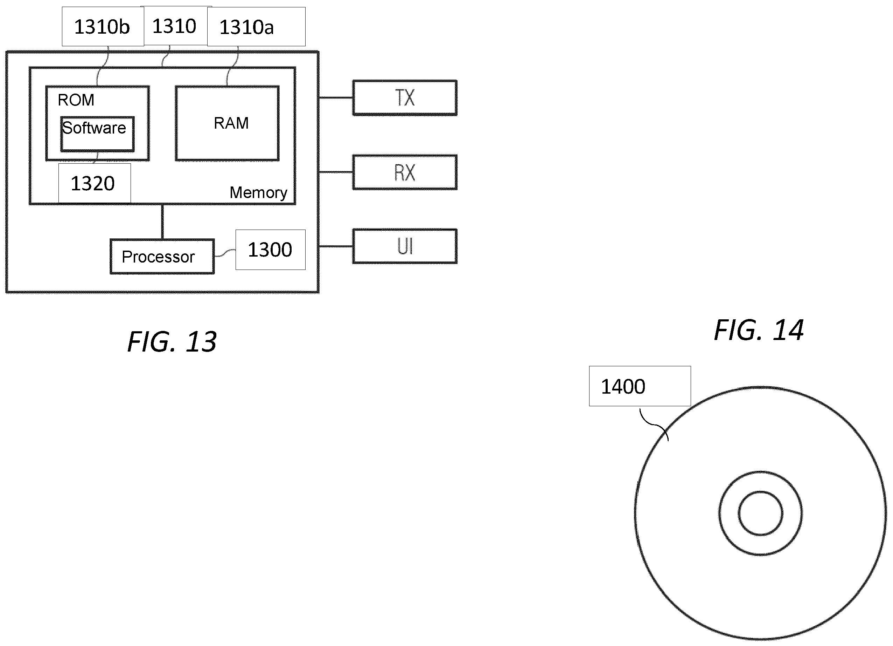

FIG. 13 is schematic block diagram of an apparatus according to one or more example embodiments; and
FIG. 14 is a non-transitory medium for storing computer-readable instructions which, when executed or processed by one or more processors of an apparatus, may perform operations according to one or more example embodiments.

### Detailed Description

Example embodiments relate to a multi-camera apparatus and method of operation thereof.

Example embodiments may also provide a computer program comprising computer-readable instructions which, when executed by an apparatus, perform the method.

Example embodiments may relate to displaying an alert in the event of detecting an object, such as a user's finger or part thereof, overlying a camera of the multi-camera apparatus that is not being used to display a viewfinder image. The object may be considered an unwanted object in this context.

An apparatus may be a user device such as a mobile or portable user device. Examples include smartphones, tablet computers, wearable computers and digital assistants. However, example embodiments are not limited to any one of these particular examples.

Such user devices may comprise a plurality of cameras having at least partially overlapping fields-of-view. For example, the plurality of cameras may be mounted on the same side or surface of the user device and/or may be oriented in substantially the same direction relative to the user device.

For ease of explanation, example embodiments refer to a smartphone having a plurality of cameras on a rear side thereof. It will be appreciated that other forms of user device and camera arrangements may be used.

A camera may comprise a camera sensor for generating a set of image data based on light or other wavelengths arriving at said camera sensor, possibly through one or more lenses.

A set of image data may represent pixel values of one, or a plurality of frames. Pixel values may represent, for example, brightness or red, green and blue (RGB) values of respective pixels. Sets of image data from respective cameras may be provided, e.g. via one or more controllers or processors, for display on a display device.

For example, during use of a camera application on a smartphone comprising a plurality of cameras, a first set of image data from a first camera may be displayed as a live feed, i.e. as image data representing a series of sequential frames. The live feed may be referred to as a viewfinder image. The viewfinder image may be displayed as part of a graphical user interface (GUI) of the camera application.

A user may use the viewfinder image to position the smartphone in order to capture a desired image based on what they see. The user may also adjust aspects of the viewfinder image, for example in terms of zoom and/or focus. When the user is satisfied with the viewfinder image, they may cause capture, i.e. saving, of a final image by means of selecting a soft button, hard button and/or via a voice command or gesture.

The final image may comprise a plurality of sets of image data from the respective different cameras. The image data is used in combination to provide an optimal image and/or an image having a desired effect. The final image may be saved to memory of the smartphone and/or to remote storage.

The plurality of cameras may have different respective properties, either by virtue of properties of their camera sensor and/or one or more lenses associated therewith.

For example, first and second cameras of the smartphone may differ only in terms of their spatial position on a surface of the smartphone. From this, left and right images may be generated for producing a three-dimensional final image, at least in respect of some target objects. Additionally, or alternatively, the left and right images may be used to estimate depth of one or more target objects. In the final image, foreground target objects may be displayed in focus, and background objects or regions may be blurred to provide a "portrait" effect. Additionally, or alternatively, a first camera may have a first resolution and the second camera may have a second resolution that is greater than the first resolution. This may allow certain target objects to be captured at a greater resolution than other objects or regions in the final image. Additionally, or alternatively, a first camera may capture colour image data whereas a second camera may capture only monochrome image data. In the final image, the monochrome image data may be used to enhance certain details in the colour image data. Additionally, or alternatively, a first camera may have a first focal length and a second camera may have a second focal length.

It will therefore be appreciated that two, three or even more cameras may be provided having different respective properties. A processing means, e.g. one or more processors or controllers, may be configured by means of computer-readable instructions and/or firmware, to provide a final image using a combination of the respective sets of image data therefrom. The specific form of final image may be based on a user selection, e.g. via an effects menu of the camera application, or may be a default or automatically-determined selection.

An issue may arise if an object, that is an object that the user does not intend to appear in a final image, overlies one or more cameras that is or are not providing the viewfinder image. In other words, the object at least partially obstructs respective field(s) of view of the one or more cameras that is or are not providing the viewfinder image. The user does not know that the object will appear in the final image and/or will otherwise prevent or detract the selected effect so that the final image is not optimal. The placement of a user's finger (an example of an unwanted object) over at least part of a camera is a common issue.

Example embodiments enable a user to be informed in such cases in order that they may take corrective action.

FIG. 1 is a front plan view of a smartphone 100. The smartphone 100 may comprise, on a front surface 101, a display screen 102 (which may or may not be touch-sensitive), a microphone 103, a loudspeaker 104 and a front-facing camera 105. The display screen 102 may be used to display a GUI associated with a camera application, including a viewfinder image.

FIG. 2 is a rear plan view of the smartphone 100. The smartphone 100 may comprise, on a rear surface 111, a camera system 113 comprised of first, second and third cameras 115, 116, 117 at respective positions on said rear surface. The smartphone 100 may comprise any number of cameras equal to two or more in number and their respective locations may be different from those shown in FIG. 2 and other figures herein. The smartphone 100 may also comprise a flash light 119 and a rear microphone 121.

The smartphone 100 may be configured by virtue of hardware, firmware and/or software to receive respective sets of image data provided by the first, second and third cameras 115, 116, 117. Prior to receipt of a capture input, only one set of the image data may be required to provide a viewfinder image.

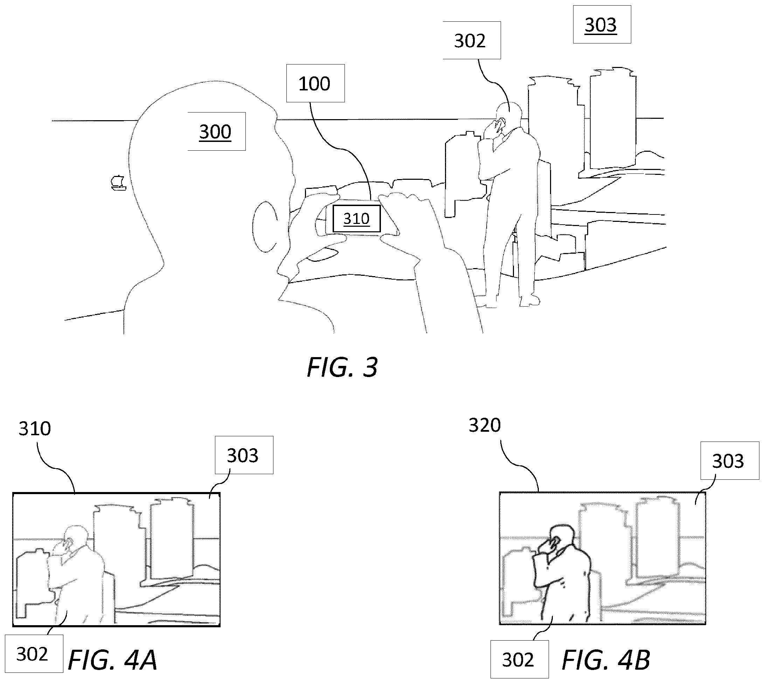

FIG. 3 is a perspective view of a user 300 holding the smartphone 100 when preparing to capture an image of a scene comprising a target object 302 and background region 303. The form of scene is not important for an understanding of example embodiments herein.

Upon initiating a camera application on the smartphone 100, a viewfinder image 310 may be displayed on the display screen 102.

The viewfinder image 310 may be generated as a live feed of image frames based on a first set of image data from the first camera 115. This may be by default, or it may be that image data from one of the second or third cameras 116, 117 is used as the basis for the viewfinder image 310.

FIG. 4A is a close-up view of the viewfinder image 310 at a time when the user 300 is happy to initiate capture of a final image.

FIG. 4B is a close-up view of a final image 320 that results from capture.

It will be seen that the final image 320 is similar to that of the viewfinder image 310 but is enhanced in that the second set of image data from the second camera 116 has greater resolution, which is applied to the target object 302, whereas the background region 303 has a lower resolution and is slightly blurred. The third set of image data from the third camera 117 may represent a depth map substantially over the same field-of-view, which has been used to distinguish between the target object 302 and the background region 303. This is one example effect, but it will be appreciated that the first, second and third cameras 115, 116, 117 co-operative in terms of providing different sets of image data for corresponding pixel or frame positions for being processed to produce the final image 320.

FIG. 5 is a partial plan view of the rear surface 111 of the smartphone 100. FIG. 5 shows the camera system 113 when oriented as shown in FIG. 3, i.e. in landscape mode. Prior to initiating capture, the user 300 may unknowingly cover at least part of the second camera 116 with an object such as their finger 500. The object could alternatively be part of their clothing or some other object. The finger 500 obstructs at least part of the field-of-view of the second camera 116.

Because the field-of-view of the first camera 115 is not obstructed by the finger 500 and is providing a set of image data used for the viewfinder image 310, the viewfinder image 310 does not signal or alert the user 300 as to this condition. FIG. 6A shows the viewfinder image 310 based on the first set of image data.

FIG. 6B shows an example final image 610 that may result from combining image data from at least the first, second and third cameras 115, 116, 117. A very dark region 620 appears in correspondence to the finger 500 obstructing part of the field-of-view of the second camera 116.

Other adverse effects may also result, and it may be that the finger also obstructs at least part of the field-of-view of the third camera 117, which may further degrade the final image 610. Returning to the FIG. 6B example, even if the second camera 116 were not used, the full desired effect would not be achieved because some image data is not used or available.

FIG. 7 is a flow diagram indicating processing operations that may be performed by an apparatus, e.g. the smartphone 100 described above, according to one or more example embodiments. The processing operations may be performed by hardware, software, firmware or a combination thereof. The shown order is not necessarily indicative of the order of processing. The apparatus may comprise, or at least include, one or more means for performing the operations, wherein the means may comprise one or more processors or controllers which, when executing computer-readable instructions, may cause said operations to be performed.

A first operation 701 may comprise providing a plurality of sets of image data from a respective plurality of cameras on the apparatus having overlapping fields-of-view. In this context, the term "overlapping" implies that there is at least some overlap.

The a plurality of sets of image data may used in combination to provide a final image, e.g. based on image data from corresponding pixel or image positions within respective frames.

The term providing may mean receiving, generating and/or storing.

A second operation 702 may comprise displaying a viewfinder image comprising at least part of a first set of the image data from a first camera of the plurality of cameras.

A third operation 703 may comprise detecting an object obstructing at least part of a field-of-view of a second camera of the plurality of cameras and not a field-of-view of the first camera.

A fourth operation 704 may comprise, responsive to the detection, displaying an alert on the viewfinder image.

A technical effect is to alert a user as to the state of image data provided by at least the second camera which will be used for generating the final image, and thereby enables corrective action by the user.

Returning to previous examples, FIG. 8A shows one example of how an alert may be displayed responsive to the FIG. 5 situation.

In this case, a modified viewfinder image 810 is displayed on the display screen 102 of the smartphone 100. The modified viewfinder image 810 includes, in this case, a semi-transparent indicator region 820 whose position is based on where the finger 500 appears in a frame based on the second set of image data or will appear in the final image.

The first set of image data from the first camera 115 still forms the basis of the viewfinder image 810 whereas the semi-transparent indicator region 820 may be generated separately.

FIG. 8B shows another form of indicator, in this case a representation 830 of the object, i.e. the finger 500. This may be based on knowledge of, or an assumption that, the object is a finger 500, which may be based on object detection techniques mentioned below. The same considerations as to position mentioned above may apply.

Another form of indicator may be an outline of the object or some other graphic. For example, an outline of the finger 500 may be shown.

The size of the indicator displayed in the viewfinder image 810, whether an indicator region 820 or representation 830 of the finger 500, may be based on the size of the finger in the final image. In some example embodiments, the size may be varied, for example based on the focal length of the second camera 116 (or third camera 117 if that is the one at least partially covered). For example, if a user selects to zoom-in using the viewfinder image 810, it may be that the impact of the object on the final image will be reduced and hence the size of the indicator region 820 or representation 830 may reduce to inform that less or no corrective action is needed.

The appearance of the indicator, whether an indicator region 820 or representation 830 of the finger 500, may be based on an estimated impact of the finger on the final image.

The impact may be defined as the degree to which the final image is affected by the presence of the finger 500. For example, the estimated impact may be quantified in some way, e.g. in terms of a percentage impact. For example, FIGs. 9A - 9C show different degrees (or percentages) of transparency for respective representations 920A - 920C of the object displayed in the viewfinder image 810. For example, the estimated impact may be a quantity based on the proportion, or number of pixels, that the finger 500 occupies within the second image data, or will occupy within the final image. The transparency may reduce as the quantified impact increases.

Referring to FIG. 9A, for example, if the finger 500 occupies an estimated 10% of the second image data, or will occupy that percentage of the final image, the transparency may be set at 90%. Referring to FIG. 9B, if the finger 500 occupies 50% of the second image data, or will occupy that percentage of final image, the transparency may be set at 50%. Referring to FIG. 9C, if the finger 500 occupies an estimated 80% of the second image data, or will occupy that percentage of the final image, the transparency may be set at 20%.

Similarly, the transparency may reduce based on the number of cameras, other than the first camera 115 providing the viewfinder image 810, that the finger 500 at least partially covers or overlies. This will similarly have an impact on the final image. Where both the second and third cameras 116, 117 are each at least partially covered by the finger 500, the transparency of the indicator region 820 or representation 830 of the finger 500 may be reduced to something similar to FIG. 9B or FIG. 9C, for example.

In some example embodiments, the position of the indicator in the viewfinder image 810 may indicate what corrective action to take.

For example, the position of the indicator may be displayed closer to one or more edges of the viewfinder image 810 than to others, to indicate the direction that the user should move their finger 500 towards. Sometimes this position will be the position that the finger 500 will appear in the final image; however, sometimes it may not, for example if the viewfinder image 810 is displayed as a mirror or reverse image. An arrow or similar indicator indicative of the corrective action may also be displayed.

For example, FIG. 10A shows the viewfinder image 810, including the representation 830 of the finger 500, closer to the top and left-hand edges. This indicates that upwards and/or leftwards movement of the finger 500 will correct the issue, as indicated in FIG. 10B. An arrow 832 may also be displayed.

For example, FIG. 11A shows the viewfinder image 810, including the representation 830 of the finger 500, closer to the bottom and right-hand edges. This indicates that downwards and/or rightwards movement of the finger will correct the issue, as indicated in FIG. 11B. An arrow 834 may also be displayed.

Returning to FIG. 7, the third operation 703 involves detecting an object obstructing at least part of a field-of-view of a second camera of the plurality of cameras and not a field-of-view of the first camera.

In the context of the smartphone 100 described above, this may be involve detecting an object obstructing at least part of the field-of view of one or both of the second and third cameras 116, 117. For ease of explanation, the following will focus on the second camera 116 but the same or similar considerations are applicable to the third camera 117.

Detecting may involve one or more methods to be described below.

In an example embodiment, detecting an object, e.g. the finger 500, may be based, at least in part, on the second set of image data from the second camera 116.

For example, detection may involve detecting an object corresponding to one or more predetermined object types, e.g. a finger or clothing sleeve, to give two examples.

In this respect, object detection algorithms are known in the art, generally involving identifying "blobs" of adjacent pixels having the same or similar pixel values in terms of colour and/or contrast. This allows for segmentation of images in which different groups of pixels are separately processed. Alternatively, or additionally, depth information may be used to segment the groups of pixels, with groups having the same or similar depths being regarded as belonging to the same segment.

A blob or image segment may then be compared in terms of its shape and/or other parameters, such as brightness features, contrast features, textural features and/or how the blob moves over a plurality of frames, in order to identify, or classify, the blob as being a particular object.

For example, predetermined reference data comprising shapes and other parameters associated with a finger may be provided. Corresponding data may be generated for an identified blob in the second set of image data and if there is a close match with the predetermined reference data, then a finger object maybe detected.

For example, a machine-learned model may be used. The machine-learned model may be trained using training data comprising images representing, at least in part, the one or more predetermined object types. For example, the training data may comprise multiple images, each representing at least part of a finger extending inwards from an edge of, or across, the respective image. The trained machine-learned model may then, during inference, receive as input the second set of image data from the second camera and may produce a positive output, or classification, when said image data represents a frame including a finger.

The reference data and/or machine-learned model may be stored locally on a memory the smartphone 100 and/or may be stored remotely, e.g. on a cloud server.

Additionally, or alternatively, an object, e.g. the finger 500, may be detected based, at least in part, on its position and brightness as represented in the second set of image data. The finger 500 will likely extend inwards from an edge of an image represented by the second set of image data and have a below-threshold brightness due to its closeness to the second camera 116. If both conditions are met, then the presence of the finger 500 may be detected.

Additionally, or alternatively, an object, e.g. the finger 500, may be detected based, at least in part, on proximity of a real-world object to the second camera 116. For example, it may be assumed that a user does not wish to capture a real-world object that is very close (e.g. within 20 mm) to the second camera 116. Therefore, a real-world object determined to be within a threshold distance of the second camera 116 may be considered unwanted. This proximity determination may be based on the second set of image data, if representing a depth map in any way, or by using a proximity sensor associated with the second camera 116. The proximity sensor may be a capacitive, inductive, optical and/or ultrasonic type of sensor.

For avoidance of doubt, the operations described above may be performed by an apparatus that does not comprise cameras and receives image data from a different apparatus that comprises the plurality of cameras.

For completeness, FIG. 12 is one schematic representation of functional modules of an apparatus 1200, which may comprise the smartphone 100 or other form of user device. The apparatus may be configured to perform the operations described herein, for example operations described with reference to any preceding process.

The apparatus 1200 may comprise a controller 1202, which may comprise one or more processors, one or more microprocessors or similar. The apparatus may also comprise a display screen 1204, a capture button 1206 and first, second and third cameras 1208, 1209, 1210. The capture button 1206 is optional, wherein image capturing or saving may be initiated using a soft button via a GUI and/or via voice or gesture inputs. The apparatus 1200 may also comprise a network interface 1214, one or more memories 1216 and reference data 1218. The network interface 1214 may be configured for wired or wireless communications with an external processing system which can be of any suitable form. For example, the network interface 1214 may comprise one or more of a cellular interface, such as for 3G, 4G, 5G or future generation standards, a short-range interface such using the Bluetooth or Zigbee protocols, and a WiFi interface, e.g. using the IEEE 802.11 communications standard. The network interface 1214 may also be used to send and/or receive captured images to and/or from remote storage, e.g. a cloud repository. The one or more memories 1216 may be used to store one or more applications and/or captured images. The reference data 1218 may comprise data usable for object detection and/or may comprise one or more machine-learned models for object detection, as described above.

FIG. 13 shows, in overview, another schematic representation of an apparatus according to an embodiment, which may comprise the smartphone 100 as described herein. The apparatus may be configured to perform the operations described herein, for example operations described with reference to any preceding process. The apparatus comprises at least one processor 1300 and at least one memory 1310 directly or closely connected to the processor. The memory 1310 includes at least one random access memory (RAM) 1310a and at least one read-only memory (ROM) 1310b. Computer program code (software) 1320 is stored in the ROM 1310b. The apparatus may be connected to a transmitter (TX) and a receiver (RX). The apparatus may, optionally, be connected with a user interface (UI) for instructing the apparatus and/or for outputting data. The at least one processor 1300, with the at least one memory 1310 and the computer program code 1320 are arranged to cause the apparatus to at least perform at least the method according to any preceding process by executing the computer program code.

FIG. 14 shows a non-transitory media 1400 according to some embodiments. The non-transitory media 1400 is a computer readable storage medium. It may be e.g. a CD, a DVD, a USB stick, a blue ray disk, etc. The non-transitory media 1400 stores computer program code, causing an apparatus to perform the method of any preceding process by the apparatus executing the computer program code.

Any mentioned apparatus and/or other features of particular mentioned apparatus may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

In some examples, a particular mentioned apparatus may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data when further functionality is required for a device, and this can be useful in examples where a device is perceived to have sufficient capacity to store such pre-programmed software for functionality that may not be enabled by a user.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice. Furthermore, in the claims means-plus-function clauses are intended to cover the structures described herein as performing the recited function and not only structural equivalents, but also equivalent structures.

## Claims

1. An apparatus, comprising:
means for receiving a plurality of sets of image data from a respective plurality of cameras on the apparatus having overlapping fields-of-view, wherein the plurality of sets of image data are used in combination to provide a final image;
means for displaying a viewfinder image comprising at least part of a first set of the image data received from a first camera of the plurality of cameras;
means for detecting an object obstructing at least part of a field-of-view of a second camera of the plurality of cameras and not a field-of-view of the first camera;
means, responsive to the detection, for displaying an alert on the viewfinder image.

2. The apparatus of claim 1, wherein the means for detecting an object is configured to detect the object based, at least in part, on second image data from the second camera.

3. The apparatus of claim 2, wherein the means for detecting an object is configured to detect within the second image data an object corresponding to one or more predetermined object types.

4. The apparatus of claim 3, wherein the means for detecting an object is configured to use a machine-learned model trained using training data comprising images representing, at least in part, the one or more predetermined object types.

5. The apparatus of any of claims 2 to 4, wherein the means for detecting an object is configured to detect the object based, at least in part, on the position and brightness of one or more objects within the second image data.

6. The apparatus of claim 5, wherein the means for detecting an object is configured to detect an object as one that extends inwards from an edge of an image represented by the second image data and has a below-threshold brightness.

7. The apparatus of any of claims 2 to 6, wherein the means for detecting an object is further configured to detect the object based, at least in part, on proximity of a real-world object represented in the second image data to the second camera.

8. The apparatus of any preceding claim, wherein the object comprises at least part of a user's finger.

9. The apparatus of any preceding claim, wherein the means for displaying the alert is configured to display a representation of the object on the viewfinder image.

10. The apparatus of claim 9, wherein the representation of the object is displayed on the viewfinder image at a position based on where the object would appear in the final image.

11. The apparatus of claim 9 or claim 10, wherein the representation of the object displayed on the viewfinder image comprises an outline or partially-transparent representation of the object.

12. The apparatus of claim 11, further comprising means for quantifying an impact of the object on the final image and wherein the amount of outline or transparency is based on quantified impact.

13. The apparatus of claim 12, wherein the quantified impact is based on the amount or proportion of the second image data that represents the object and/or wherein the means for detecting an object is further configured to detect an object at least partly obstructing respective fields-of-view of a plurality of the cameras, including that of the second camera, and wherein the quantified impact is based on the number of respective fields-of-view that the object at least partly obstructs.

14. A method, comprising:
receiving a plurality of sets of image data from a respective plurality of cameras oriented in the same direction, wherein the plurality of sets of image data are used in combination to provide a final image;
displaying a viewfinder image comprising at least part of a first set of the image data received from a first camera of the plurality of cameras;
detecting an object obstructing at least part of a field-of-view of a second camera of the plurality of cameras and not a field-of-view of the first camera;
displaying, responsive to the detection, an alert on the viewfinder image.

15. A computer program comprising instructions which, when executed by an apparatus, cause the apparatus to:
receive a plurality of sets of image data from a respective plurality of cameras oriented in the same direction, wherein the plurality of sets of image data are used in combination to provide a final image;
display a viewfinder image comprising at least part of a first set of the image data received from a first camera of the plurality of cameras;
detect an object obstructing at least part of a field-of-view of a second camera of the plurality of cameras and not a field-of-view of the first camera;
display, responsive to the detection, an alert on the viewfinder image.
